Europäisches Patentamt

European Patent Office

Office européen des brevets

(19)

(11) EP 0 945 749 A2

(12) EUROPÄISCHE PATENTANMELDUNG

(43) Veröffentlichungstag:
29.09.1999 Patentblatt 1999/39

(51) Int. Cl.⁶: **G02B 27/14**, G02B 27/10

(21) Anmeldenummer: 99104029.6

(22) Anmeldetag: 15.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 25.03.1998 CH 71198

(71) Anmelder: **Balzers Hochvakuum AG**
9477 Trübbach (CH)

(72) Erfinder:
• **Edlinger,Johannes**
6800 Feldkirch (AT)
• **Hessler, Sabine**
9496 Balzers (LI)

(74) Vertreter:
**Troesch Scheidegger Werner AG**
**Patentanwälte,**
**Siewerdtstrasse 95,**
**Postfach**
**8050 Zürich (CH)**

(54) **Optisches Bauelement**

(57) An einem X-Cube (30) wird der mechanische Weg für Licht (L₁) aus einem ersten Spektralbereich und für Licht (L₂) aus einem zweiten so unterschiedlich ausgelegt, dass für beide erwähnten Spektralbereiche der optische Weg im wesentlichen gleich lang wird und jeweils für eine bestimmte Dimensionierungswellenlänge genau gleich lang.

FIG.4

**Beschreibung**

Die vorliegende Erfindung betrifft ein optisches Bauelement aus einem für Licht mindestens aus einem ersten und aus einem zweiten Spektralband transparenten Material mit einem im Bauelement eingebetteten optischen System, welches umfasst:

- ein erstes optisches Schichtsystem in einer ersten Ebene, das Licht aus dem ersten Band mindestens überwiegend reflektiert, Licht aus dem zweiten Band mindestens überwiegend transmittiert;

- ein zweites optisches Schichtsystem in einer zweiten Ebene, welche die erste Ebene in einem zentralen Bereich des Körpers schneidet und das das Licht aus dem ersten Band mindestens überwiegend transmittiert, Licht aus dem zweiten Band mindestens überwiegend reflektiert;

- mit einer ersten Ein- oder Austrittsflache für Licht aus dem ersten Band;

- mit einer zweiten Ein- oder Austrittsflache für Licht aus dem zweiten Band sowie

- mit einer Aus- oder Eintrittsflache für Licht sowohl aus dem ersten wie auch aus dem zweiten Band.

Die vorliegende Erfindung geht aus von Problemen, die sich an sogenannten X-Cubes ergeben. Ein X-Cube ist eine spezifische Ausführungsform des oben erwähnten, optischen Bauelementes, ist auch im Rahmen vorliegender Erfindung eine bevorzugte Ausführungsform. Am X-Cube schneiden sich die zwei Ebenen der erwähnten optischen Schichtsysteme senkrecht. Das Bauelement, geschnitten senkrecht zu den Ebenen der Schichtsysteme, definiert eine Quadratfläche. Die beiden Ein- oder Austrittsflächen werden dabei durch parallele, ebene Flachen gebildet, ebenso die Aus- oder Eintrittsfläche senkrecht dazu. Letzterer gegenüberliegend ist eine weitere Ein- oder Austrittsfläche, eine dritte vorgesehen, für Licht aus einem dritten Spektralband.

Solche, oft und auch in vorliegender Beschreibung X-Cube genannten Bauelemente, werden beispielsweise in Projektoren eingesetzt, um ROT/GRÜN- und BLAUkanäle zu rekombinieren. Sie können aber auch zur Farbaufteilung anstelle der Rekombination verwendet werden mit umgekehrtem Strahlengang. Bezüglich solcher Bauteile kann verwiesen werden auf

- US 2 737 076

- US 2 754 718

- DE 40 33 842

sowie bezüglich deren Anwendung auf

- JP 7-109443

- US 5 098 183

- EP 0 359 461

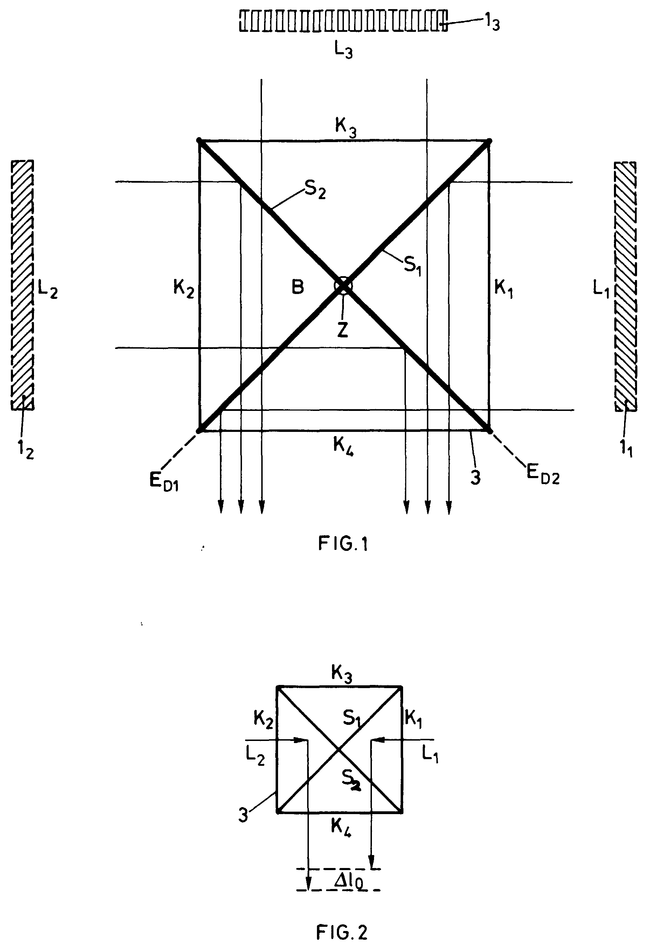

Im weiteren wird verwiesen auf die der vorliegenden Beschreibung als Anhang A beigefügte PCT-Anmeldung PCT/CH97/00411, welche insbesondere bezüglich eines bevorzugten Herstellungsverfahrens für derartige X-Cubes bzw. Bauelemente als integrierter Bestandteil der vorliegenden Beschreibung erklärt wird. In Fig. 1 ist der Einsatz eines X-Cubes für die Lichtrekombination dargestellt. Licht $L_1$ aus einem ersten Spektralbereich, wie insbesondere aus dem ROTbereich von

600 nm - 800 nm

wird über die ersten Ein- oder Austrittsflache $K_1$, teilweise nach Transmission durch das zweite optische Schichtsystem $S_2$, am ersten $S_1$ reflektiert und verlässt den X-Cube an der Aus- oder Eintrittsfläche $K_4$.

Licht $L_2$ aus einem zweiten Spektralbereich, insbesondere dem BLAUbereich von

400 nm - 500 nm

wird der zweiten Ein- oder Austrittsfläche $K_2$ zugeführt, wird nach teilweiser Transmission durch das erste optische Schichtsystem $S_1$ am zweiten $S_2$ reflektiert und tritt gemeinsam mit dem Licht $L_1$ an der erwähnten Aus- oder Eintrittsflache $K_4$ auf.

Insbesondere beim erwähnten Einsatz eines solchen Bauelementes, insbesondere eines X-Cubes, wird an einer dritten Ein- oder Austrittsfläche $K_3$ Licht $L_3$ aus einem dritten Spektralbereich, insbesondere dem GRÜNbereich von

500 nm - 600 nm

dem Bauelement zugeführt, durch beide optischen Schichtsysteme $S_1$ und $S_2$ transmittiert und verlässt das Element an der gemeinsamen Aus- oder Eintrittsflache $K_4$.

Die optischen Schichtsysteme $S_1$ bzw. $S_2$ werden durch eine oder mehrere optisch wirksame Schicht(en) gebildet, wie dies insbesondere in der als Anhang A beigefügten PCT-Anmeldung beschrieben ist.

Das Licht $L_1$, $L_2$ und $L_3$ aus den erwähnten drei Spektralbändern wird dabei oft über Lichtventile $1_1$, $1_2$ und $1_3$ dem Bauelement 3 zugeführt, insbesondere durch LCD-Anordnungen. Mittels der optischen Schichtsysteme $S_1$ und $S_2$, dielektrischen Reflektoren, werden die imaginären Bilder des ersten und zweiten

Spektralbereiches, entsprechend $L_1$ und $L_2$, wie erwähnt insbesondere des ROT- und des BLAU-Spektralbereiches, über die zugeordneten Lichtventile $1_1$ und $1_2$ mit dem realen Bild des dritten Spektrums, entsprechend $L_3$, insbesondere bevorzugt aus dem GRÜN-Spektrum, über die auch zugeordneten Lichtventile $1_3$ zur Deckung gebracht.

Je besser dies geschieht, desto besser wird das Projektionsbild.

Insbesondere ergibt sich daraus die Forderung nach sehr engen mechanischen Toleranzen des optischen Bauelementes.

Wie erwähnt, kann ein solches Bauelement mit bezüglich Fig. 1 umgekehrt gerichtetem Strahlengang zur Farbaufteilung eingesetzt werden, wie insbesondere an einer CCD-Kamera. Ein solches Bauelement, und zwar nicht nur in der spezifischen Ausführungsform als X-Cube, sondern in der eingangs erwähnten generalisierten Form, weist insbesondere den nachfolgend erläuterten Nachteil auf.

Fallen, wie in Fig. 2 schematisch und anhand des Spezialfalls X-Cube dargestellt, ein Licht $L_1$ des ersten Spektralbereiches und des zweiten, entsprechend $L_2$, auf das Bauelement 3, so ergibt sich, bei entlang den optischen Wegen des Lichtes $L_1$ und $L_2$ gleichem Bauelement-Material, trotzdem und aufgrund der Dispersion dieses Materials, bei X-Cube üblicherweise ein Glas, wie insbesondere BK7-Glas, ein Unterschied der optischen Weglängen $l_{01}$, $l_{02}$ zwischen den jeweiligen Ein- oder Austrittsflächen $K_1$ bzw. $K_2$, den zugeordneten optischen Schichtsystemen $S_1$, $S_2$ und der Aus- oder Eintrittsfläche $K_4$. Für den dargestellten, senkrechten Lichteinfall gilt für den Unterschied der optischen Weglängen:

$$\Delta l_o = n_2 - n_1 ( \cdot W) = l_{02} - l_{01}$$

Darin bedeutet:

$\Delta l_o$: der Unterschied der optischen Weglängen $l_{01}$, $l_{02}$ für das Licht $L_1$, $L_2$ der beiden erwähnten Spektren;

$n_1, n_2$: die Brechwerte des Materials des optischen Bauelementes entlang der jeweiligen optischen Wege;

W: den geometrischen Weg des Lichts $L_1$, $L_2$.

Sind entlang der optischen Wege unterschiedliche geometrische Wege $W_1$ bzw. $W_2$ zu berücksichtigen, dann ergibt sich:

$$\Delta l_o = n_2 \cdot W_2 - n_1 \cdot W_1.$$

Üblicherweise werden aber die mechanischen bzw. geometrischen Weglängen $W_1$, $W_2$ gleich gewählt. Für einen X-Cube aus BK7-Glas mit einer Querschnittskantenlänge von 40 mm ergibt sich für Licht einer gegebenen Wellenlänge $L_1$ im ersten Spektralbereich:

$$\lambda_1 = 643{,}8 \text{ nm}$$

und für Licht aus dem zweiten Spektralbereich der gegebenen Wellenlänge $\lambda_2$:

$$\lambda_2 = 435{,}8 \text{ nm}$$

ein optischer Weglängenunterschied $\Delta l_o$

$$\Delta l_o = 0{,}4789 \text{ mm} = 40 \text{ mm} \cdot (n_2 - n_1).$$

Für ein dem optischen Bauelement folgendes, abbildendes System ergibt sich jeweils ein Bild im Spektrum entsprechend $L_1$ bzw. im Spektrum entsprechend $L_3$, beim betrachteten Fall insbesondere im ROT- und BLAUspektrum, bei gleichzeitiger Lichtbeaufschlagung des Bauelementes, das sich aus zwei Objektebenen ergibt, die um $\Delta l_o$ zueinander versetzt sind.

Dieser Unterschied der optischen Weglängen, kann extern bezüglich des optischen Bauelementes, durch Montage der in Fig. 1 dargestellten Lichtventile $1_1$ und $1_2$ in unterschiedlichem Abstand von den zugeordneten Ein- oder Austrittsflächen $K_1$ bzw. $K_2$ korrigiert werden. Dies erfordert jedoch einen beträchtlichen Montage- und Justieraufwand. Werden die Lichtventile $1_1$ und $1_3$ äquidistant von den zugeordneten Ein- oder Austrittsflächen des Bauelementes montiert, so führt dies aufgrund des erwähnten optischen Weglängenunterschiedes zu Bildunschärfen.

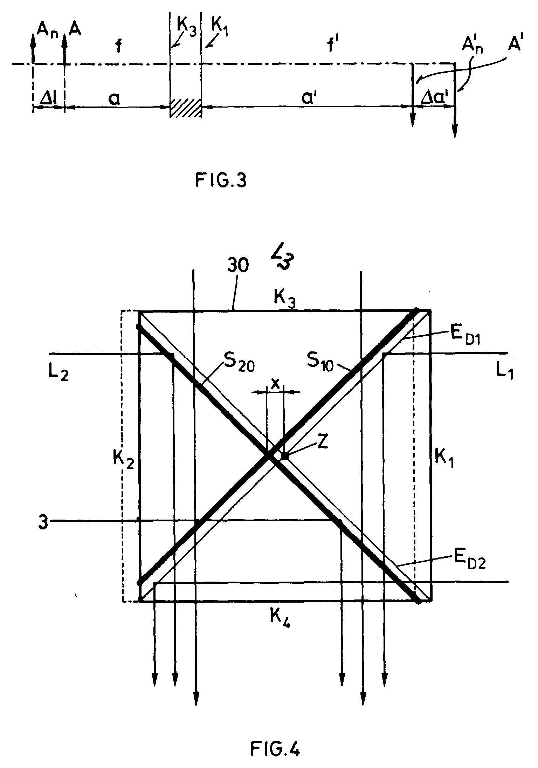

Die Abbildungsgleichungen für ein optisches System mit Hauptebenen $K_1$ und $K_3$ gemäss Fig. 3 und beidseitig an Luft, ergeben, dass

$$1/a' - 1/a = 1/f'$$

worin bedeuten

a: Objektweite $= AK_3$

a': Bildweite $= K_1 A'$

f': Brennweite des Systems.

Die Differenz der Objektweiten um $\Delta l$ bewirkt eine Differenz der Bildweiten um $\Delta a'$. Es ergibt sich:

$$\Delta a' = f' (a + \Delta l)/(f' + a + \Delta l) - f'a/(f' + a).$$

Dadurch wird zusätzlich der Abbildungs-Massstab $\beta$ beeinflusst, für den gilt:

$$\beta = a'/a.$$

Für eine Abbildung, die z.B. vergrössernde Wirkung haben soll, muss das Objekt A innerhalb der ein- bis zweifachen Brennweite f' liegen, also gilt:

$$f' \leq |a| \leq 2f'.$$

Ein Beispiel:

$$f' = 50 \text{ mm},$$

$$a = -60 \text{ mm}$$

$$\Delta l = -0,4784 \text{ mm},$$

dann ist $\Delta a' = 11,41$ mm, und der Vergrösserungs-Massstab $\beta$ ist für die Abbildung von A gleich -5, für die Abbildung von $A_n$, gleich 4,772. Dabei stellt $A_n$ das Bild auf der Objektweite $(a + \Delta l)$ dar.

Es ist Aufgabe der vorliegenden Erfindung, den erwähnten Nachteil an vorbekannten Bauelementen der eingangs erwähnten Art zu beheben. Dies wird am erfindungsgemässen Bauelement dadurch erreicht, dass die optischen Wege für Licht einer bestimmten Wellenlänge aus dem ersten und für Licht einer bestimmten Wellenlänge aus dem zweiten Band jeweils zwischen der zugeordneten Ein- oder Austrittsfläche, über das zugeordnete, reflektierende optische Schichtsystem zur Aus- oder Eintrittsfläche, gleich sind.

In einer weitaus bevorzugten Ausführungsform wird das Material des Bauelementes mindestens entlang der erwähnten optischen Wege $l_{01}$, $l_{02}$ gleich gewählt, und es werden den optischen Wegen entsprechende geometrische Wege für das Licht der bestimmten erwähnten Wellenlängen unterschiedlich ausgelegt, und zwar unterschiedlicher, als durch Fertigungstoleranzen des optischen Bauelementes bedingt. Dabei sei als mechanischer Weg der in einer Längenmasseinheit gemessene Weg des jeweiligen Lichtes von einer der zugeordneten Ein- oder Austrittsflächen, $K_1$ bzw. $K_2$ von Fig. 1, zum jeweils zugeordneten, reflektierenden optischen Schichtsystem $S_1$, $S_2$ und weiter zur Aus- oder Eintrittsfläche, entsprechend $K_4$ von Fig. 1, verstanden.

In einer weiteren, weitaus bevorzugten Ausführungsform des optischen Bauelementes sind die beiden Ein- oder Austrittsflächen durch parallele, ebene Flächen gebildet und die erste und zweite Ebene - worin die optischen Schichtsysteme liegen - schneiden sich, bezüglich der Mittenebene der erwähnten parallelen Flächen, versetzt.

Dadurch wird, insbesondere bei Wahl gleicher Materialien entlang der erwähnten optischen Wege und insbesondere an einem X-Cube-Bauelement - wie oben definiert -, eine höchst einfache Möglichkeit eröffnet, die erwähnten Unterschiede der optischen Weglängen durch die mechanischen Weglängen zu kompensieren.

An einer weiteren bevorzugten Ausführungsform der erfindungemässen optischen Bauelementes stehen die erste und zweite Ebene - worin die optischen Systeme angeordnet sind - senkrecht aufeinander. Weiterhin sind die beiden Ein- oder Austrittsflächen vorzugsweise durch parallele, ebene Flächen gebildet, wobei weiter bevorzugt die Fläche der ersten Ein- oder Austrittsfläche mit der ersten Ebene und die Fläche der zweiten Ein- oder Austrittsfläche mit der Zweiten Ebene einen 45°-Winkel einschliessen. Damit weist in dieser bevorzugten Ausführungsform das erfindungsgemässe optische Bauelement eine Querschnittsfläche senkrecht zu den Ebenen mit den optischen Schichtsystemen auf, die quadratisch ist.

Obwohl sich, wie ersichtlich wurde, die vorliegende Erfindung primär mit den Problemen beschäftigt, welche sich bezüglich der an den optischen Schichtsystemen reflektierten Spektralbändern ergeben, wird in einer weiteren bevorzugten Ausführungsform des erfindungsgemässen optischen Bauelementes vorgeschlagen, dass das erste und zweite optische Schichtsystem Licht aus einem dritten Spektralbereich mindestens überwiegend transmittieren und eine dritte Ein- oder Austrittsfläche für dieses Licht vorgesehen ist - gemäss $K_3$ von Fig. 1 - wobei die Aus- oder Eintrittsflache - gemäss $K_4$ von Fig. 1 - für Licht aller drei Bänder vorgesehen ist.

In bevorzugter Auführungsform sind die ersten zwei Ein- oder Austrittsflächen, die dritte und die erwähnte Aus- oder Eintrittsfläche paarweise senkrecht zueinander und definieren dabei Vorzugsweise einen Körper mit quadratischem Querschnitt.

In einer weiteren bevorzugten Ausführungsform, bei der entlang des optischen Weges des Lichtes aus dem ersten Spektralband das Material des Bauelementes den Brechwert $n_1$ aufweist, entlang des optischen Weges für Licht des zweiten Spektralbandes den Brechwert $n_2$, sind die entsprechenden mechanischen Wege $l_{m1}$ und $l_{m2}$ wie folgt dimensioniert:

$$l_{m1} / l_{m2} = n_2 / n_1$$

und zwar im Rahmen von Fertigungstoleranzen des optischen Bauelementes.

Wie erwähnt werden in einer weitaus bevorzugten Ausführungsform für das erste Spektralband der ROTbereich gewählt mit

600 nm - 800 nm Wellenlänge,

für das zweite Spektralband der BLAUbereich mit

400 nm - 500 nm Wellenlänge

und für das dritte Spektralband der GRÜNbereich mit

500 nm - 600 nm Wellenlänge.

Vorzugsweise werden bezüglich der erwähnten ersten Spektralbänder als Dimensionierungs-Wellenlängen spezifisch ausgewählte Wellenlängen, z.B. bei Intensitätsmaximum des verwendeten Lichts gewählt, z.B. für die erwähnten bevorzugten Spektralbänder

$$\lambda_1 = 620 \text{ nm}$$

$$\lambda_2 = 440 \text{ nm},$$

entsprechend einzusetzenden Lichtquellen.

In einer weiteren bevorzugten Ausführungsform des erfindungsgemässen Bauelementes sind die optischen Systeme je durch ein Schichtsystem gebildet, wobei eines der beiden Systeme durch ein über die Schnittstelle mit dem zweiten System durchgehendes Schichtsystem gebildet ist. Um dabei die optische Abbildung auch im Schnittbereich der beiden Systeme möglichst wenig zu stören, wird weiter vorgeschlagen, dass das durchgehende Schichtsystem im Schnittbereich um höchstens 5 μm, vorzugsweise um höchstens 2 μm, aus seiner Ebene heraus verformt ist.

Im weiteren weist eine bevorzugte Ausführungsform des optischen Bauelementes gemäss vorliegender Erfindung eine Querschnittsfläche auf, senkrecht zur ersten und zweiten Ebene, die im wesentlichen ein Quadrat bildet und woran, an einer der Ein- oder Austrittsflächen, gegenüberliegende Kanten abgeplattet sind, dies vorzugsweise parallel entsprechend zur ersten und zweiten Ebene.

Durch das erfindungsgemässe Bauelement, an welchem selber die Unterschiede der optischen Weglängen kompensiert sind, eröffnet sich nun die höchst vorteilhafte Möglichkeit, Lichtventile, wie insbesondere LCD-Panels, direkt auf die zugeordneten Ein- oder Austrittsflächen aufzubringen, so gemäss Fig. 1 direkt auf die Flächen $K_1$ und $K_2$ und gegebenenfalls $K_3$. Dadurch können hohe Kosten für die Halterung und Justierung der jeweiligen Panels gespart werden, und die ganze Anordnung wird äusserst kompakt. Dabei können weiter die erwähnten Flächen des erfindungsgemässen Bauelementes mit einer Elektrodenschicht versehen werden, wie beispielsweise mit einer ITO-Schicht beschichtet werden, welche Schicht als Elektrode für die erwähnten, direkt aufgebrachten Lichtventilanordnungen, insbesondere LCD-Panels, fungiert. Das erfindungsgemässe optische Bauelement eignet sich insbesondere als Lichtkombinationselement an einer Projektionsanordnung oder als Lichtteilerelement an einer Bildaufzeichnungsanordnung, insbesondere an einer CCD-Kamera. Ein erfindungsgemässes Verfahren zur Herstellung eines als X-Cube ausgebildeten optischen Bauelementes gemäss vorliegender Erfindung zeichnet sich nach dem Wortlaut von Anspruch 14 aus.

Es geht aus von einem Kubus aus einheitlichem Material, woran die beiden optischen Systeme in Mittenebenen angeordnet sind. Bezüglich einer weitaus bevorzugten Herstellungstechnik für dieses Zwischenprodukt wird vollumfänglich auf die als Anhang A beigelegte PCT-Anmeldung Nr. CH97/00411 verwiesen.

Beim erfindungsgemässen Verfahren werden nun parallel zu einer der Kubusdiagonalflächen und diesbezüglich asymmetrisch - vorzugsweise gleichzeitig - zwei Eckprismen vom Kubus abgetrennt, und anschliessend wird die X-Cube-Querschnittsfläche durch - wiederum vorzugsweise gleichzeitiges - Abtrennen der verbleibenden zwei Eckpartien, senkrecht zur erwähnten Kubusdiagonalfläche, komplettiert.

Dabei werden bevorzugterweise die erwähnten Kuben wesentlich länger als für einen einzelnen X-Cube notwendig bereitgestellt. Erst nach den erwähnten Schnittoperationen werden die X-Cubes abgelängt.

Die Erfindung wird anschliessend anhand weiterer Figuren beispielsweise erläutert. In den Figuren zeigen:

Fig. 1    einen bekannten X-Cube, eingesetzt an einer Lichtrekombinations-Anordnung, wie beispielsweise an einer Projektions-Anordnung,

Fig. 2    schematisch, einen X-Cube gemäss Stand der Technik, zur Erläuterung des aufgrund von Dispersion resultierenden optischen Weglängen-Unterschiedes $\Delta l_O$,

Fig. 3    anhand einer schematischen Darstellung eines optischen Abbildungssystems, die Auswirkungen auf die Abbildung, wenn das Objekt gleichzeitig auf unterschiedlichen Objektweiten präsentiert wird,

Fig. 4    einen Querschnitt durch einen erfindungsgemässen X-Cube, als bevorzugtes erfindungsgemässes Bauelement,

Fig. 5    schematisch, eine dem erfindungsgemässen Verfahren folgende Herstellungsweise eines erfindungsgemässen X-Cubes, ausgehend von einem Zwischenprodukt-Kubus der in Anhang A ausführlich erläuterten Art,

Fig. 6    ein nach dem erfindungsgemässen Verfahren hergestelltes X-Cube mit Lichtventilanordnung.

Gemäss Fig. 4 wird an einem erfindungsgemässen X-Cube 30 grundsätzlich der mechanische Weg für Licht $L_1$ aus dem ersten Spektralbereich, vorzugsweise dem erwähnten ROTbereich, und für Licht $L_2$ aus dem zweiten Spektralbereich, wie erwähnt bevorzugterweise aus dem BLAUbereich, so unterschiedlich ausgelegt, dass für beide Spektralbereiche der optische Weg im wesentlichen gleich lang wird, jeweils für eine bestimmte Dimensionierungs-Wellenlänge genau gleich lang. Mit $l_m$ als mechanischer Weg gilt:

$$n_1 \cdot l_{m1} = n_2 \cdot l_{m2} = n_1 \cdot (l_{m1} + x).$$

Es ergibt sich mithin:

$$x = l_{m1} \cdot (n_1 - n_2)/n_2.$$

Für die bevorzugten Spektralbereiche ROT und BLAU ergibt sich:

$$x = l_{mblau} \, (n_{blau} - n_{rot}) / n_{rot}.$$

Zum Beispiel für $l_{mblau}$ = 40 mm ergibt sich x zu 0,3158 mm, bei einer BLAUwellenlänge $\lambda_2$ von 435,8 nm und einer ROTwellenlänge $\lambda_1$ von 643,8 nm.

In Fig. 4 sind an einem erfindungsgemässen X-Cube mit quadratischer Querschnittsfläche in Analogie zu Fig. 1 die Körperdiagonalflächen $E_{D1}$ und $E_{D2}$ eingetragen. Sie schneiden sich rechtwinklig und definieren das Zentrum Z der Quadrat-Querschnittsfläche. Diesbezüglich um das eben ermittelte Mass x gegen die Eintrittfläche $K_2$ des kürzerwelligen Lichtes, wie beispielsweise des Lichtes im BLAU-Spektralbereich, versetzt, schneiden sich die vorgesehen optischen Schichtsysteme $S_{10}$ und $S_{20}$.

Damit wird der mechanische Weg $l_{m1}$ um soviel länger als der mechanische Weg $l_{m3}$, als der optische Weg an einem X-Cube gemäss Fig. 1, $l_{o1}$ kürzer ist als der optische Weg $l_{o2}$ des längerwelligen Lichtes.

Dadurch, dass am erfindungsgemässen Bauelement selber die Unterschiede der optischen Weglängen durch unterschiedliche mechanische Weglängen kompensiert sind, wird es möglich, direkt auf dem Bauelement - insbesondere die Flächen $K_1$ und $K_2$ am X-Cube gemäss Fig. 4 und optimalerweise auch auf die Fläche $K_3$ - direkt Lichtventil-Anordnungen, insbesondere LCD-Anordnungen, aufzubringen.

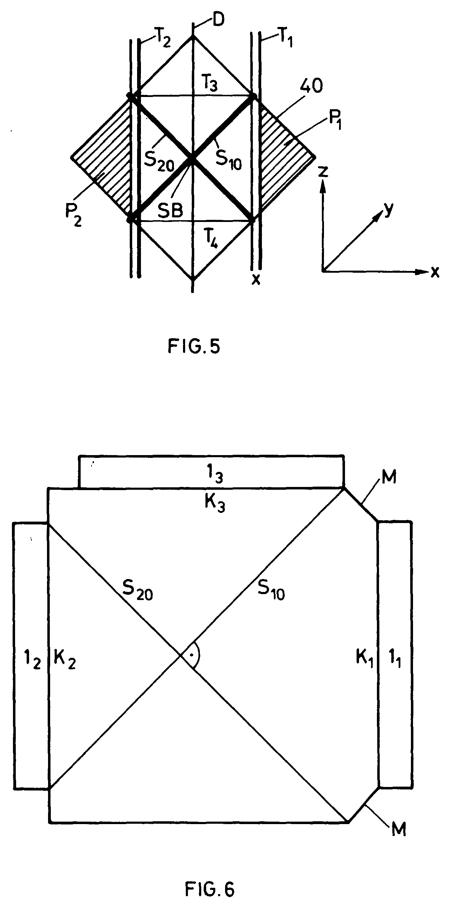

Anhand von Fig. 5 soll ein bevorzugtes erfindungsgemässes Vorgehen zur Herstellung eines erfindungsgemässen X-Cubes dargestellt werden. Dieses Verfahren geht aus von einem Zwischenprodukt, nämlich einem Kubus 40, in welchem die optischen Schichtsysteme $S_{1o}$ und $S_{2o}$ in Mittenebenen angeordnet sind.

Die Herstellung eines solchen Zwischenprodukt-Kubus 40 ergibt sich, in bevorzugter Ausführungsform, aus <u>Anhang A</u>. Dabei wird insbesondere auf Figuren 1 bis 4h des erwähnten Anhangs mit zugeordneter Beschreibung verwiesen. Wie nun aus Fig. 5 ersichtlich, werden vom Kubus 40, dem erwähnten Zwischenprodukt, durch ebene Schnitte, wie durch Sägen entlang paralleler Ebenen $T_1$ und $T_2$, zwei Prismen $P_1$ und $P_2$ abgetrennt. Dabei werden die Schnitte bei $T_1$ und $T_2$ so ausgeführt, dass der Schnittbereich SB der beiden optischen Schichtsysteme $S_{10}$ und $S_{20}$ wie anhand von Fig. 4 erläutert wurde um den Betrag x gegen die eine der Schnittflächen $T_1$, $T_2$ versetzt ist. Bevorzugterweise wird dabei der Kubus 40 in der in Fig. 5 dargestellten Position auf einem xyz-Tisch mit Halterung positioniert, und es werden die Schnitte bei $T_1$ und $T_2$ durch Auslenkung des xyz-Tisches um den Betrag x angebracht. Anschliessend wird der X-Cube durch Ausführen wiederum planparalleler Schnitte $T_3$ und $T_4$, nun zu SB symmetrisch, fertiggestellt. Es resultiert ein X-Cube, wie in Fig. 6 im Querschnitt dargestellt mit charakteristisch abgeplatteten Kanten bei M. Die Schnitte

$T_1$, $T_2$ bzw. $T_3$, $T_4$ werden vorzugsweise gleichzeitig ausgeführt. Bevorzugterweise wird der Kubus 40 in y-Richtung von Fig. 5 so lange ausgebildet, dass, nach Durchführung der Schnitt $T_1$ bis $T_4$ in besagter Richtung, mehrere X-Cubes vom selben Kubus 40 abgelängt werden können.

Die abgeplatteten Partien bilden dabei Flächen, die jeweils zu einem der optischen Schichtsysteme parallel sind.

An dem in Fig. 6 im Querschnitt dargestellten, erfindungsgemässen X-Cube sind die direkt auf die Ein- oder Austrittsflächen $K_1$ bis $K_3$ aufgebrachten Lichtventilanordnungen, insbesondere LCD-Panels $1_1$ bis $1_3$, dargestellt.

In einer bevorzugten Ausführungsform ist das eine der beiden optischen Schichtsysteme $S_{10}$, $S_{20}$ durchgehend über die Schnittstelle SB gemäss Fig. 5 geführt, vorzugsweise dasjenige Schichtsystem, woran Licht des längerwelligen Spektralbandes reflektiert wird, also das ROTreflektor-Schichtsystem in der bevorzugten Ausführungsform des erfindungsgemässen Bauelementes. Es wird hierzu insbesondere auf Fig. 5 der erwähnten, als <u>Anhang A</u> beigefügten PCT-Anmeldung verwiesen.

Dabei weicht das durchgehend ausgebildete Reflektor-Schichtsystem $S_{10}$ im Schnittbereich SB um höchstens 5 μm, vorzugsweise gar um höchstens 2 μm, aus der durch das System definierten Ebene ab. Auch hierzu sei insbesondere auf Fig. 5 und die zugeordnete Beschreibung des erwähnten Anhanges verwiesen.

Dadurch, dass alle optischen Wege der verarbeiteten Spektralbänder insbesondere für ROT, GRÜN und BLAU exakt gleich gewählt werden, können am erfindungsgemässen optischen Bauelement Lichtventile, und dabei insbesondere LCD-Panels, direkt auf das optische Bauelement beispielsweise aufgeklebt werden. Dadurch können hohe Kosten für Halterung und präzise Justierung solcher Anordnungen eingespart werden, und zudem ergibt sich ein höchst kompakter Aufbau. Wie erwähnt, kann ein solches erfindungsgemässes Bauelement sowohl als Farbteilerelement, wie insbesondere für CCD-Kameras, als auch als Farbrekombinationselement, wie für Projektionsanordnungen, eingesetzt werden.

**Patentansprüche**

1.  Optisches Bauelement aus einem für Licht mindestens aus einem ersten ($L_1$) und aus einem zweiten ($L_2$) Spektralband transparenten Material, mit einem im Bauelement eingebetteten optischen System ($S_{10}$, $S_{20}$), welch letzteres umfasst:

    -   ein erstes ($S_{10}$) optisches System in einer ersten Ebene, das Licht aus dem ersten ($L_1$) Band mindestens überwiegend reflektiert, Licht aus dem zweiten ($L_2$) Band mindestens überwiegend transmittiert;

- ein zweites ($S_{20}$) optisches System in einer zweiten Ebene, welche die erste Ebene in einem zentralen Bereich (SB) des Körpers (30) schneidet und das das Licht aus dem ersten Band (L1) mindestens überwiegend transmittiert, Licht aus dem zweiten Band ($L_2$) mindestens überwiegend reflektiert;

- mit einer ersten Ein- oder Austrittsoberfläche ($K_1$) für Licht aus dem ersten Band ($L_1$);

- mit einer zweiten Ein- oder Austrittsoberfläche ($K_2$) für Licht aus dem zweiten Band ($L_2$);

- mit einer Aus- oder Eintrittsfläche ($K_4$) für Licht sowohl aus dem ersten ($L_1$) wie auch aus dem zweiten ($L_2$) Band,

dadurch gekennzeichnet, dass die optischen Wege ($l_o$) für Licht einer bestimmten Wellenlänge aus dem ersten ($L_1$) und für Licht einer bestimmten Wellenlänge aus dem zweiten ($L_2$) Band jeweils zwischen der zugeordneten Ein- oder Austrittsfläche ($K_1$, $K_2$), über das zugeordnete, reflektierende optische System ($S_{10}$, $S_{20}$) zur Aus- oder Eintrittsfläche ($K_4$), gleich sind.

2. Optisches Bauelement, dadurch gekennzeichnet, dass das Material des Bauelementes entlang der optischen Wege mindestens des Lichtes aus dem ersten ($L_1$) und zweiten ($L_2$) Band gleich ist und den optischen Wegen entsprechende physikalische Wege ($l_m$) für das Licht der bestimmten Wellenlängen unterschiedlich sind, und zwar unterschiedlicher als durch Fertigungstoleranzen bedingt.

3. Bauelement nach einem der Ansprüche 1 oder 2, dadurch gekennzeichnet, dass die beiden Ein- oder Austrittsflächen ($K_1$, $K_2$) durch parallele, ebene Flächen gebildet sind und sich erste und zweite Ebene ($S_{10}$, $S_{20}$) bezüglich der Mittenebene der parallelen Flächen (x) versetzt schneiden.

4. Bauelement nach einem der Ansprüche 1 bis 3, dadurch gekennzeichnet, dass die erste ($S_{10}$) und zweite Ebene ($S_{20}$) senkrecht zueinander stehen und vorzugsweise die beiden Ein- oder Austrittsflächen ($K_1$, $K_2$) durch parallele, ebene Flächen gebildet sind, wobei weiter bevorzugt die Fläche der ersten Ein oder Austrittsfläche ($K_1$) mit der ersten Ebene ($S_{10}$) und die Fläche der zweiten Ein- oder Austrittsfläche ($K_2$) mit der zweiten Ebene einen 45°-Winkel einschliessen.

5. Bauelement nach einem der Ansprüche 1 bis 4, dadurch gekennzeichnet, dass das erste und zweite optische System Licht aus einem dritten Spektralbereich ($L_3$) mindestens überwiegend und

mindestens genähert gleich transmittieren und eine dritte Ein- oder Austrittsfläche ($K_3$) für dieses Licht vorgesehen ist, wobei die Aus- oder Eintrittsfläche ($K_4$) für Licht aller drei Bänder ($L_1$, $L_2$, $L_3$) vorgesehen ist.

6. Bauelement nach einem der Ansprüche 1 bis 5, dadurch gekennzeichnet, dass die ersten zwei Ein- oder Austrittsflächen ($K_1$, $K_2$), die dritte ($K_3$) und die Aus- oder Eintrittsfläche ($K_4$) paarweise senkrecht aufeinanderstehen, vorzugsweise einen Körper mit quadratischem Querschnitt definieren.

7. Optisches Bauelement nach einem der Ansprüche 1 bis 6, dadurch gekennzeichnet, dass bei einem Brechwert $n_1$ des Materials des optischen Bauelementes entlang des optischen Weges des Lichtes aus dem ersten ($L_1$) Band und bei einem Brechwert $n_2$ des Materials des Bauelementes entlang dem optischen Wege für Licht des zweiten ($L_2$) Bandes für die entsprechenden mechanischen Wege $l_{m1}$ und $l_{m2}$ gilt:

$$l_{m1} / l_{m2} = n_2 / n_1$$

im Rahmen von Fertigungstoleranzen des optischen Bauelementes.

8. Optisches Bauelement nach einem der Ansprüche 1 bis 7, dadurch gekennzeichnet, dass das erste ($L_1$) Spektralband wie folgt gewählt ist:

600 nm - 800 nm Wellenlänge,

das zweite ($L_2$) Spektralband:

400 nm - 500 nm Wellenlänge,

ein ggf. berücksichtigtes drittes ($L_3$) Spektralband:

500 nm - 600 nm Wellenlänge.

9. Bauelement nach einem der Ansprüche 1 bis 8, dadurch gekennzeichnet, dass die optischen Systeme ($S_{10}$, $S_{20}$) je durch ein Schichtsystem gebildet sind und eines der beiden Systeme ($S_{10}$) durch ein über die Schnittstelle (SB) durchgehendes Schichtsystem gebildet ist.

10. Bauelement nach Anspruch 9, dadurch gekennzeichnet, dass das durchgehende Schichtsystem ($S_{10}$) im Schnittbereich (SB) um höchstens 5 µm, vorzugsweise um höchstens 2 µm, aus der Ebene, die durch das durchgehende Schichtsystem definiert ist, verformt ist.

11. Optisches Bauelement nach einem der Ansprüche 1 bis 10, dadurch gekennzeichnet, dass seine Querschnittsfläche senkrecht zur ersten und zweiten Ebene ($S_{10}$, $S_{20}$) im wesentlichen ein Quadrat bildet, woran an einer der Ein- oder Austrittsoberflächen ($K_1$) gegenüberliegende Kanten (M) abgeplattet sind, vorzugsweise parallel zur ersten bzw. zweiten Ebene.

12. Optisches Bauelement nach einem der Ansprüche 1 bis 11, dadurch gekennzeichnet, dass an mindestens zwei der Ein- oder Austrittsoberflächen ($K_1$, $K_2$) eine Anordnung von Lichtventilen ($1_1$, $1_2$), vorzugsweise eine LCD-Anordnung, aufgebracht ist und vorzugsweise die Ein- oder Austrittsoberfläche mit einer Elektrodenschicht für die Anordnung beschichtet ist.

13. Verwendung des optischen Bauelementes nach einem der Ansprüche 1 bis 12 als Lichtkombinationselement an einer Projektionsanordnung oder als Lichtteilerelement an einer Bildaufzeichnungsanordnung, vorzugsweise einer CCD-Kamera.

14. Verfahren zur Herstellung eines X-Cubes nach einem der Ansprüche 1 bis 10, dadurch gekennzeichnet, dass man von einem Kubus (40) aus dem erwähnten Material, woran die beiden optischen Systeme ($S_{10}$, $S_{20}$) in Mittenebenen angeordnet sind, ausgeht, parallel zu einer der Kubusdiagonalflächen, jedoch diesbezüglich asymmetrisch zwei Eck-Prismen ($P_1$, $P_2$) abtrennt ($T_1$, $T_2$) und anschliessend die X-Cube-Querschnittsfläche durch Abtrennen der verbleibenden zwei Eckpartien senkrecht zur erwähnten Kubusdiagonalfläche (D) komplettiert.

15. Verfahren nach Anspruch 14, dadurch gekennzeichnet, dass man den Kubus mit X-Cube-Querschnittsfläche in Richtung $\perp$ zur Querschnittsfläche in mehrere X-Cubes unterteilt.

16. Verfahren nach Anspruch 14 oder 15, dadurch gekennzeichnet, dass man die parallelen Abtrennoperationen je gleichzeitig ausführt.

FIG.1

FIG.2

FIG.3

FIG.4

FIG.5

FIG.6